# EUROPÄISCHE PATENTSCHRIFT

(11) **EP 2 339 649 B1**
(45) Veröffentlichungstag und Bekanntmachung des Hinweises auf die Patenterteilung: **28.12.2011**
(21) Anmeldenummer: 09015823.9
(22) Anmeldetag: 22.12.2009
(51) Int. Cl.: H01L 31/18

(54) **Vorrichtung zur Fixierung von Leiterbahnen auf einer Solarzelle**
Device for fixing circuit routes on a solar cell
Dispositif de fixation de bandes conductrices sur une cellule solaire

(43) Veröffentlichungstag der Anmeldung: 29.06.2011
(73) Patentinhaber: KIOTO Photovoltaics GmbH, 9300 St. Veit (AT)
(72) Erfinder: Eusch, Ingram, 9500 Villach (AT); Frank, Rudolf, 9064 Pischeldorf (AT); Kogler, Armin, 9330 Treibach (AT)
(74) Vertreter: Becker, Thomas

(56) Entgegenhaltungen:
- EP-A1- 1 291 929
- EP-A1- 1 976 024
- EP-A2- 1 978 564
- WO-A1-03/059570
- WO-A2-2009/072760
- DE-A1-102006 007 447
- DE-A1-102008 020 458
- JP-A- 11 087 756
- JP-A- 2003 168 811
- US-A1- 2009 236 328

## Beschreibung

Die Erfindung betrifft eine Vorrichtung zur Fixierung von Leiterbahnen auf mindestens einer ersten Haupt-Oberfläche mindestens einer Solarzelle.

Üblicherweise verlaufen auf einer Solarzelle (Photovoltaik-Zelle) mindestens zwei Leiterbahnen parallel zueinander, wobei ein Paar (2) Leiterbahnen eine erste Haupt-Oberfläche (Oberseite) einer Solarzelle mit einer zweiten Haupt-Oberfläche (Unterseite) einer benachbarten Solarzelle verbinden. Mehrere, so miteinander verbundene Solarzellen bilden einen sogenannten Solarzellen-String, der entsprechend folgende Merkmale umfasst:
- Der String besteht aus mehreren, im Abstand hintereinander angeordneten Solarzellen,
- benachbarte Solarzellen sind jeweils über mindestens zwei elektrische Leiterbahnen verbunden,
- jede Leiterbahn ist mit einem ersten Abschnitt mit einer Oberseite einer Solarzelle fest verbunden und mit einem zweiten Abschnitt mit einer Unterseite der benachbarten Solarzelle fest verbunden.

Üblicherweise bestehen die Leiterbahnen aus einem Grundkörper und einer lötbaren Beschichtung. Die Leiterbahnen sind dann auf den Solarzellen aufgelötet.

Um einzelne Solarzellen mit Leiterbahnen zu einem kompletten Solarzellen-String zu verarbeiten, sind verschiedene Verarbeitungsstufen und Behandlungsschritte notwendig. Dabei kommt es wesentlich darauf an, eine exakte Positionierung der einzelnen Solarzellen und der einzelnen Leiterbahnen zu gewährleisten, so dass auch die Kombination mehrerer Solarzellen mit mehreren Leiterbahnen zu einem Solarzellen-String in der gewünschten und notwendigen Ausrichtung (Zusammenstellung) erfolgt. Dies ist unter anderem deshalb wichtig, weil die Solarzellen extrem dünn (ca. 200 µm) und spröde sind und die Leiterbahnen mit einer Breite von beispielsweise 0,5 bis 3 mm und einer Dicke von maximal 0,2 bis 1 mm schmale Bänder sind, die nicht ohne weiteres in den gewünschten Flächenkontakt (Fixierung) mit der Oberseite/Unterseite der Solarzelle gebracht werden können.

Unter "Fixierung von Leiterbahnen auf einer Solarzelle" wird erfindungsgemäß sowohl der vorbereitende Schritt verstanden, die einzelne Leiterbahn in einer definierten Position auf der Solarzelle zu halten (reine Auflage). Unabhängig davon erstreckt sich die Fixierung alternativ und/oder kumulativ auch auf die physikalische/chemische Fixierung (integrale Verbindung) von Leiterbahn und Solarzelle, beispielsweise durch Verlöten.

Aus der DE 10 2006 007 447 A1 ist eine Anlage bekannt, mit der Solarzellen auf einem Transportband fixiert werden. Ein zugehöriger Niederhalter besteht aus einem Rahmen, der an seinen beiden Randbereichen Auflageflächen aufweist, die in der Funktionsposition auf den Transportbändern aufliegen und ein Fenster aufweisen, in oder neben dem Niederhalterköpfe angeordnet sind, die jeweils eine Niederhalternadel aufweisen und schwenkbar am Rahmen gehalten sind. Die Nadeln drücken beim Aufsetzen des Niederhalters auf die Leiterbahnen und drücken damit die Leiterbahnen auf die Solarzelle, fixieren diese also. Dabei wird Wert darauf gelegt, dass die Kraft, mit der die Leiterbahnen fixiert werden, nur in einer Richtung wirkt. Die genannten Nadeln werden in sogenannten Niederhalterköpfen gelagert, die schwenkbeweglich am Rahmen angelegt sind.

Der bekannte Niederhalter ist konstruktiv sehr komplex, die Nadeln führen zu sehr kleinen Druckpunkten, wobei die Leiterbahn leicht beschädigt werden kann. Darüber hinaus ist die Einstellung der Druckkraft im Bezug auf die Fläche der Leiterbahn ausgeschlossen und im Übrigen nur individuell über die Niederhalterköpfe möglich. Im Ergebnis weist der mit dieser Vorrichtung konfektionierte Solarzellen-String keine ausreichende Flächenverbindung von Leiterbahn und Solarzelle auf.

Der Erfindung liegt die Aufgabe zugrunde, eine Vorrichtung zur Fixierung von Leiterbahnen auf einer Solarzelle anzubieten, die eine optimierte Verbindung von Leiterbahn und Solarzelle schafft. Diese Aufgabe wird durch die erfindungsgemässe Vorrichtung wie Sie in Anspruch 1 definiert ist.

Die Lösung dieses Problems wird durch eine Vorrichtung zur Fixierung von Leiterbahnen auf mindestens einer ersten Haupt-Oberfläche mindestens einer Solarzelle erreicht, die folgende Merkmale aufweist:
- Eine Transporteinrichtung, auf der mehrere Solarzellen im Abstand zueinander entlang einer Transportrichtung bewegbar sind. Die Solarzellen können sowohl einzeln als auch in beliebigen Kombinationen zu kürzeren oder längeren Solarzellen-Strings vorkonfektioniert sein. Die Konfektionierung der Leiterbahnen und Solarzellen kann in der Vorrichtung oder in einer der Vorrichtung verfahrenstechnisch vorgeschalteten Anlage erfolgen. Für die weiteren Verfahrensschritte, die mit der erfindungsgemäßen Vorrichtung ausgeübt werden, ist es wichtig, dass
- auf der der Transporteinrichtung gegenüberliegenden Haupt-Oberfläche jeder Solarzelle mehrere Leiterbahnen verlaufen. In der Regel werden auch Leiterbahnen auf der zweiten Haupt-Oberfläche angeordnet sein, insbesondere dann, wenn kleinere oder größere Solarzellen-Strings vorkonfektioniert wurden.
- Die Vorrichtung umfasst ferner mindestens eine Traverse, die von einer Ausgangsposition im Abstand zu der Haupt-Oberfläche in eine Funktionsposition bewegbar ist, in der mehrere Niederhalter, die von der Traverse in Richtung auf die Haupt-Oberfläche der Solarzelle abstehen, flächig auf die korrespondierenden Leiterbahnen drücken. Die Traverse hat demgemäß die Geometrie eines Arms oder eines Rahmens. Sie kann von einer Ausgangsposition in die Funktionsposition bewegt werden. Wesentlich ist, dass die Traverse mit den genannten Niederhaltern ausgebildet ist, die zumindest unmittelbar bevor die Niederhalter die Leiterbahnen berühren, von der Traverse in Richtung auf die Haupt-Oberfläche der Solarzelle abstehen, so dass die Fixierung ausschließlich über die genannten Niederhalter erfolgt, während die Traverse lediglich der Befestigung der Niederhalter dient und die Aufgabe hat, die Niederhalter gegen die Leiterbahnen zu bewegen und von diesen wieder abzunehmen. Daraus folgt, dass eine einzige Traverse mit einer Vielzahl von Niederhaltern bestückt sein kann, oder alle Niederhalter oder Gruppen von Niederhaltern gemeinsam an einer Traverse befestigt sind. Es ist nur die Bewegung der Traverse notwendig, um alle daran befestigten Niederhalter in Kontakt mit den Leiterbahnen der Solarzellen zu bringen. Dies kann in unterschiedlichen Bewegungsabläufen erfolgen, wie nachstehend noch dargestellt wird. Wesentlich ist, dass die Niederhalter einen flächigen Kontakt zu den korrespondierenden Leiterbahnen schaffen, weshalb
- die Niederhalter von Federn gebildet werden, die mit einem Ende an der Traverse befestigt sind und an ihrem anderen, freien Ende jeweils mindestens einen sphärischen Körper aufweisen, der in der Funktionsposition der Traverse auf der zugehörigen Leiterbahn aufliegt.

Die Federn gewährleisten einen sanften Kontakt zwischen Niederhalter und Leiterbahn. Die Federn erlauben es auch, einen gleichmäßigen Druck von den Niederhaltern auf die Leiterbahn auszuüben. Die Federn haben weiters den Vorteil, dass - innerhalb gewisser Grenzen - trotz unterschiedlichen Abstandes zwischen Traverse und Solarzelle die Druckkräfte, die die Niederhalter auf die Leiterbahnen ausüben, nur unwesentlich variieren. Die flächige Ausbildung der Kontaktenden der Niederhalter vergleichmäßigt die Druckverteilung von den Niederhaltern auf die Leiterbahnen (Solarzellen). Dies wird durch sphärische Körper am freien Ende der Niederhalter erreicht, die entsprechend bei einem anschließenden Lötvorgang, bei dem die Leiterbahnen zumindest im Oberflächenbereich viskos werden, kalottenförmige Vertiefungen hinterlassen, die markant sind. Auch während des Lötvorgangs, bei dem sich die sphärischen Körper in die Oberfläche der Leiterbahn eindrücken, bleibt die optimierte Druckverteilung von den Niederhaltern auf die Leiterbahnen erhalten beziehungsweise wird gegenüber dem Stand der Technik deutlich verbessert. "Kalottenförmig" bedeutet im erfindungsgemäßen Sinne, dass eine Vertiefung keine unidirektionale Vertiefung (im technischen Sinne) ist, wie sie durch eine Nadel erreicht wird, wie im Stand der Technik, sondern beschreibt eine Vertiefung in der Leiterbahn, die sich über einen gewissen Flächenabschnitt der Leiterbahn erstreckt.

Dazu weisen die Niederhalter beispielsweise sphärische Körper folgender Geometrie auf: Kugel, Halbkugel, Ei, Linse, Zylinder, Kegelstumpf, Kegel, Prisma. Die geometrischen Formen können auch miteinander kombiniert einen sphärischen Körper bilden. Die beim anschließenden Lötvorgang ausgebildete kalottenförmige Vertiefung weist ein Verhältnis von Tiefe (senkrecht zur Leiterbahn-Oberfläche) zu Breite (größte Breite parallel zur Leiterbahn-Oberfläche) von typischerweise < 1:1, beispielsweise <1:2 oder <1:3 oder <1:5, <1:7 oder <1:10 auf. Bei einem nadelförmigen Einstich beträgt das Verhältnis dagegen >1:1.

Die Größe des sphärischen Körpers richtet sich nach der Größe der Leiterbahn. Bei einer Kugel beträgt der Durchmesser beispielsweise 0,5 bis 5 mm.

Die Niederhalter fixieren die Leiterbahn auf der Solarzelle entsprechend sowohl in dem Zustand, in dem die Leiterbahn noch "lose" gegen die Solarzelle anliegt, als auch während des anschließenden Lötvorgangs. Am Ende des Lötvorgangs, wenn die Leiterbahnen physikalisch/chemisch fest mit der Solarzelle verbunden sind, können die Niederhalter wieder abgenommen werden, was durch Rückschwenken der Traverse erfolgt.

Es liegt im Rahmen der Erfindung, verschiedene konkrete Ausführungsformen innerhalb dieses generellen Konzepts auszuwählen. Dazu gehören:
Die Niederhalter können aus Spiralfedern mit endseitig angeformten sphärischen Körpern bestehen. Selbstverständlich ist es auch möglich, die Niederhalter einstückig auszubilden. Anstelle von Spiralfedern können auch Blattfedern Verwendung finden.

Die Niederhalten sind so an der Traverse befestigt sein, dass sie im unbelasteten Zustand (also beispielsweise in der Ausgangsposition) unter einem Winkel ≠ 90° zur korrespondierenden Oberfläche der Solarzelle verlaufen. Mit anderen Worten: Bei einer Ausführungsform mit einer Spiralfeder verläuft die Mittenlängsachse der Spiralfeder nicht senkrecht zur Oberfläche der Solarzelle, sondern unter einem Winkel von beispielsweise 10° bis 80°. Diese Schrägstellung der Niederhalter schafft eine optimierte Druckverteilung und vor allem auch eine Vergleichmäßigung des Drucks von einem Niederhalter auf eine Leiterbahn unabhängig von der Position der Traverse relativ zu den Solarzellen (innerhalb gewisser Grenzen). In Hinblick auf die Verwendung der Vorrichtung innerhalb einer Lötanlage, bei der die Leiterbahnen auf den Solarzellen aufgelötet werden, sieht eine Weiterbildung der Erfindung vor, die sphärischen Körper der Niederhalter aus einem Material mit einer Temperaturbeständigkeit bis mindestens 300°C auszubilden. Hierzu gehören Werkstoffe aus der Gruppe: Keramik, Porzellan, Glas, Kunststoff, faserverstärkter Kunststoff (z. B. mit Glasfasern, Kohlefasern).

Die Anordnung der Niederhalter an der Traverse orientiert sich an der Positionierung der Leiterbahnen auf den Solarzellen entlang der erwähnten Transportbahn. üblicherweise verlaufen die Leiterbahnen auf den Solarzellen geradlinig und parallel zueinander. Entsprechend sieht eine Ausführungsform der Erfindung vor, dass die Niederhalter so an der Traverse befestigt sind, dass jeweils vier sphärische Körper, in unbelastetem Zustand, an Ecken eines fiktiven Rechtecks liegen. "Fiktives Rechteck" bedeutet, dass zwischen den sphärischen Körpern keine Verbindungen bestehen, abgesehen von der mittelbaren Verbindung über die Traverse.

Je nach Größe des Solarzellen-Strings können eine Vielzahl von Niederhaltern (deren sphärische Körper) entlang einer fiktiven Linie verlaufen, wobei die Anordnung derart erfolgt, dass die sphärischen Körper möglichst mittig auf der zugehörigen Leiterbahn in der Funktionsposition aufliegen und dort beim und nach dem Löten einen Abdruck hinterlassen, der möglichst vollständig innerhalb der Leiterbahn verläuft, das heißt die Vertiefung sollte sich nur bis kurz vor den Rand der entsprechenden Oberfläche der Leiterbahn erstrecken.

Das Andrücken der Leiterbahn auf die Solarzelle kann zusätzlich verbessert werden, wenn ein Niederhalter mit einem sphärischen Körper verwendet wird, der eine profilierte (strukturierte) Oberfläche aufweist, wodurch eine Vertiefung gebildet wird, die eine korrespondierende strukturierte (profilierte) Oberfläche aufweist, beispielsweise einen gerillten Wandabschnitt.

Bei dieser Ausführungsform werden vielfältig die Druckkräfte in unterschiedlichen Druckrichtungen über den Niederhalter auf die Leiterbahn und von der Leiterbahn auf die Solarzelle übertragen und damit während des anschließenden Lötvorgangs die Lötverbindung nachhaltig verbessert, insbesondere wird ein deutlich erhöhter Flächenkontakt zwischen Leiterbahn und Solarzelle erreicht, der für die elektrische Leitung wichtig ist.

Die Geometrie der Vertiefung hängt insbesondere von der Geometrie des sphärischen Körpers ab, die beispielsweise einen runden Querschnitt aufweisen kann, aber auch einen ovalen Querschnitt oder einen Querschnitt mit evolventenartigen Flanken.

Die Höhe der Vertiefung (senkrecht zur Oberfläche der Solarzelle) ist abhängig von der Dicke der Leiterbahn, der Druckkraft, mit der der Niederhalter auf die Leiterbahn gedrückt wird sowie der Geometrie des Druckkörpers. Üblicherweise entspricht die größte Höhe der Vertiefung (senkrecht zur Oberfläche der Solarzelle und Leiterbahn) maximal 70% der Gesamtdicke der Leiterbahn (in gleicher Richtung wie die Vertiefung betrachtet), wobei ein Wert von 10% genügt, um die gewünschte Druckverteilung zu erreichen. Typische Werte sind 10% bis 50% oder 10% bis 30%.

Der Abstand der Vertiefungen (in Längsrichtung der entsprechenden Leiterbahn) beträgt nach einer Ausführungsform 1,0 cm bis 3,0 cm, woraus sich ein entsprechender Abstand der Niederhalter an der Traverse ergibt.

Der Querschnitt der Vertiefung an der freien Oberfläche der Leiterbahn beträgt insbesondere 0,5 mm² bis 5 mm² mit üblichen Werten von 0,5 mm² bis 2 mm².

Die Traverse kann entlang einer Kurvenbahn von der Ausgangsposition in die Funktionsposition bewegt werden. Dabei kann die Bewegung evolventenartig sein, das heißt, die Traverse wird zunächst mehr oder weniger horizontal verschoben, bevor sie kurz vor Erreichen der Funktionsposition entlang einer Kurve in eine senkrechte (vertikale) Bewegungsrichtung übergeht. Erfindungsgemäß ist es jedoch nicht notwendig, auch nicht kurz vor Erreichen der Funktionsposition, dass die Traverse exakt vertikal (senkrecht zur Oberfläche der Solarzellen) verläuft, insbesondere dann nicht, wenn die Niederhalter in der beschriebenen schrägen Anordnung zur Traverse befestigt sind.

Die Geschwindigkeit, mit der die Traverse von der Ausgangsposition in die Funktionsposition bewegt wird, kann degressiv sein, das heißt gegen Ende abnehmend, um zu verhindern, dass beispielsweise bei nicht hundertprozentiger Ausrichtung von Traverse zu Solarzellen die Niederhalter die Leiterbahnen verschieben.

Die Transporteinrichtung kann mindestens einen Produktträger umfassen, auf dem die Solarzellen (oder ein Solarzellen-String) liegen. Die Träger können auf ihrer, den Solarzellen zugewandten Oberseite stegartige Erhöhungen aufweisen, die so angeordnet sind, dass die auf der zweiten Haupt-Oberfläche der Solarzellen verlaufenden Leiterbahnen auf den stegartigen Erhöhungen aufliegen und parallel zu diesen verlaufen. Daraus ergibt sich eine Ausführungsform, bei der die Solarzellen zumindest teilweise beidseitig Flächenabschnitte aufweisen, die nicht abgedeckt sind. Die Produktträger werden über geeignete Mittel bewegt und in die gewünschte Position gebracht, vorzugsweise motorisch. Dadurch, dass ein Produktträger mindestens einen kompletten Solarzellen-String aufnimmt, ergibt sich eine hohe Taktfrequenz und ein optimierter (gleichmäßiger) Transport sowie ein vergleichmäßigter Lötvorgang, indem mindestens ein String gleichzeitig verlötet wird.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert. Dabei zeigen, jeweils in schematisierter Darstellung:

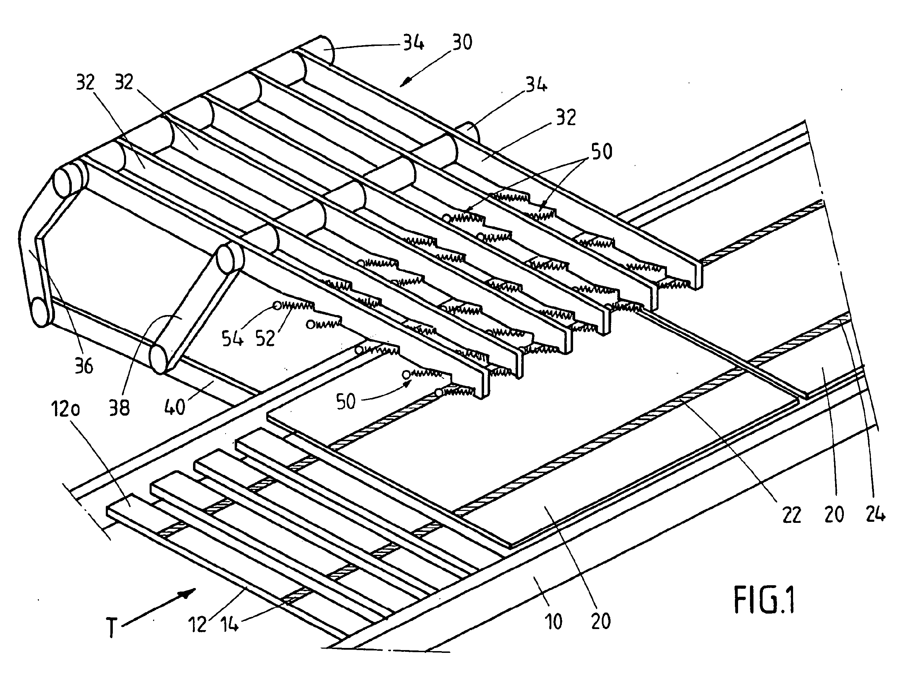

- Figur 1:: Eine perspektivische Ansicht einer erfindungsgemäßen Vorrichtung,
- Figur 2:: eine Seitenansicht der Vorrichtung nach Figur 1 in der Ausgangsposition,
- Figur 3:: einen Teilschnitt durch die Vorrichtung gemäß Figur 1 in einer Funktionsposition,
- Figur 4:: einen Schnitt durch eine Leiterbahn,
- Figur 5:: eine Seitenansicht eines Niederhalters an einer Traverse.

In den Figuren sind gleiche oder gleich wirkende Bauteile mit gleichen Bezugsziffern dargestellt.

Die Vorrichtung umfasst ein Transportsystem dessen Transportrichtung mit dem Pfeil T markiert ist. Das Transportsystem umfasst Transportträger 10, die Schienen 12 aufweisen, die senkrecht zur Transportrichtung T verlaufen. Ihre Oberseite 120 (in der Funktionsposition der Vorrichtung) weist stegartige Erhöhungen 14 auf, die sich wiederum in Transportrichtung T erstrecken oder anders ausgedrückt: senkrecht zur Längserstreckung der Scheinen 12 verlaufen. Mehrere Schienen sind zu einem Transportträger 10 verbunden.

Auf den Schienen 12 liegen Solarzellen 20 auf, wobei mehrere Solarzellen 20 zu einem Solarzellen-String über korrespondierende Leiterbahnen 22, 24 verbunden sind. Ein Transportträger 10 trägt mindestens einen kompletten String.

Die Transportträger 10 werden über nicht dargestellte Antriebsmittel bewegt.

Die Vorrichtung umfasst ferner eine Traverse 30, die aus mehreren, parallel zueinander im Abstand verlaufenden Armen 32 besteht, die auf zwei, im Abstand zueinander angeordneten Querträgern 34 gelenkig aufsitzen, wobei die Querträger 34 mehrere Arme 32 miteinander verbinden.

Vom Verbindungsbereich der Arme 32 zu den Querträgern 34 verlaufen Bügel 36, 38 zu einer Schiene 40, die mit Abstand unterhalb der Arme 32 verläuft, und zwar etwa in Höhe der Transportbahn 10.

Von den Armen 32 stehen Niederhalter 50 nach unten (in der Funktionsposition) ab. Jeder Niederhalter 50 besteht aus einer Spiralfeder 52, die an einem Ende an einem zughörigen Arm 32 befestigt ist und an ihrem freien anderen Ende einen sphärischen Körper 54 (hier: In Form einer Porzellankugel) aufweist.

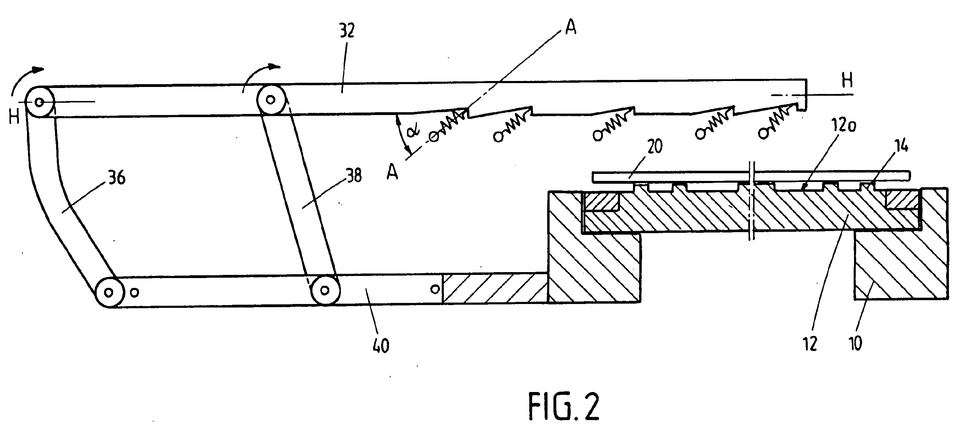

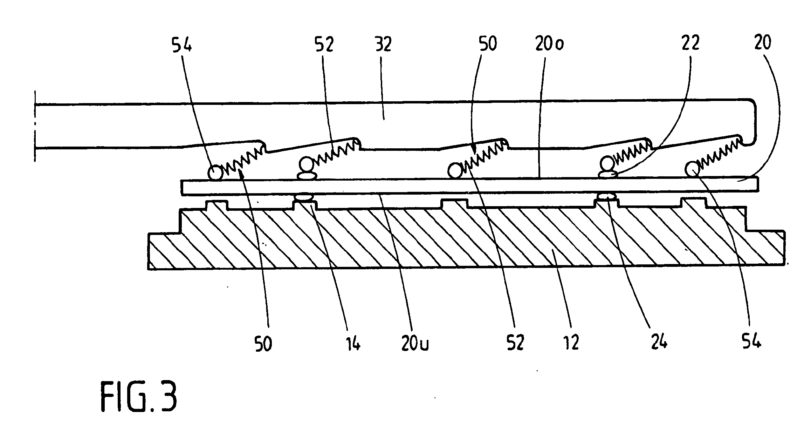

Den Figuren ist weiters zu entnehmen, dass die Axialrichtung der Feder 52 (im unbelasteten Ausgangszustand), wie sie durch die Linie A-A markiert ist, unter einem Winkel von hier ca. 45° zur Horizontalen (gekennzeichnet durch die Linie H-H verläuft. Der Winkel ist in Figur 2 mit α markiert. Mittels (nicht dargestellter) Antriebsmittel wird die Traverse 30 von der in Figur 2 dargestellten Ausgangsposition in die in Figur 3 dargestellte Funktionsposition gebracht, wobei die Bewegungsrichtung kurvenartig ist, mit abnehmender Geschwindigkeit, um die Niederhalter 50 sanft auf den Leiterbahnen 22, 24 aufzusetzen, sobald die Traverse 30 die entsprechende Position über dem Transportträger 10 erreicht hat. Nach dem ersten Kontakt zwischen den sphärischen Körpern 54 und den Leiterbahnen 22, 24 wird die Traverse 30 noch ein weiteres kleines Stück abgesenkt, um eine gewisse Druckkraft von den Niederhaltern 50 auf die Leiterbahnen 22, 24 und entsprechend von den Leiterbahnen 22, 24 auf die Solarzellen 20 auszuüben. Dabei verändert sich die Position (der Winkel α) der Niederhalter; er wird etwas kleiner, wie in Figur 3 dargestellt.

Figur 3 zeigt auch, dass einzelne Niederhalter 50 nicht auf Leiterbahnen 22, 24 liegen, sondern direkt auf der ersten Haupt-Oberfläche 20o der jeweiligen Solarzelle 20.

In der in Figur 3 dargestellten Ausrichtung erfolgt anschließend der Lötvorgang. Dieser ist als solcher bekannt und wird deshalb hier nicht weiter dargestellt und erläutert.

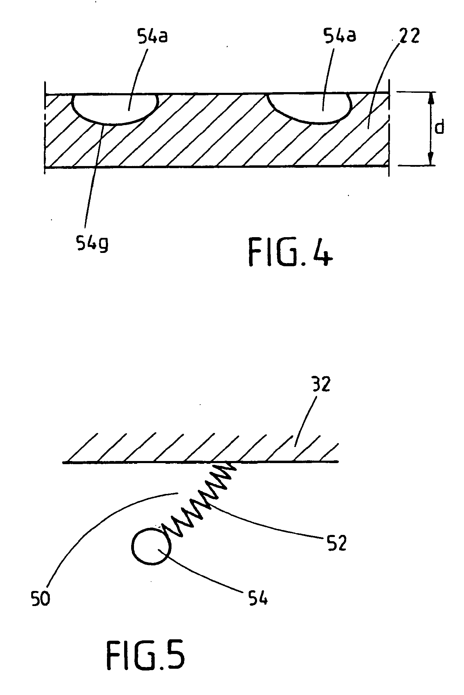

Während des Lötens kommt es in gewissem Umfang zu einem Aufweichen (zu einer Viskositätserniedrigung) des Materials der Leiterbahnen 22, 24 mit der Folge, dass sich die sphärischen Körper 54 unter dem Druck der Federn 52 ein wenig in das Material der Leiterbahnen 22, 24 eindrücken und dort Abdrücke 54a hinterlassen, wie sie in Figur 4 dargestellt sind. Die kalottenförmigen Vertiefungen 54a sind deutlich zu erkennen. Sie verlaufen mittig in der zugehörigen Leiterbahn 22, 24.

In der Aufsicht haben die kalottenförmigen Vertiefungen 54a einen etwa ovalen Querschnitt.

Zu erkennen sind die gewölbten Flanken 54g der Vertiefungen 54a, wobei die maximale Höhe der Vertiefungen 54a hier etwa der Hälfte der Dicke d der Leiterbahn 22, 24 entspricht. Die in der Figur 4 rechts dargestellte Vertiefung 54a ist gegenüber der links dargestellten Vertiefung 54a etwas gekippt, wodurch verdeutlicht werden soll, dass die Vertiefungen 54a unter den gegebenen technischen Rahmenbedingungen nicht immer eine exakte symmetrische Geometrie aufweisen und nicht immer eine exakt mittige Position auf der Leiterbahn, sondern auch etwas außermittig verlaufen können.

Angestrebt ist jedoch, dass die Vertiefungen 54a vollständig innerhalb der zugehörigen Leiterbahn 22, 24 verlaufen, das heißt umfangsseitig von der freien Oberfläche der entsprechenden Leiterbahn 22, 24 begrenzt werden.

Gemeinsam mit den gewölbten Flanken 54g ergibt das eine optimierte Kraftverteilung/Druckverteilung mit Hilfe des entsprechenden Niederhalters während des Fixiervorgangs und während des anschließenden Lötvorgangs.

Die optimierte Druckverteilung von den Niederhaltern auf den Solarzelleil-String beziehungsweise dessen Teile (Solarzellen, Leiterbahnen) verhindert weiters, dass sich die Solarzellen unter Temperatureinwirkung (insbesondere beim Lötvorgang) aufbiegen/verformen. Es ergibt sich ein geradlinig verlöteter String. Durch die erfindungsgemäße Druckverteilung wird vermieden, dass die Solarzellen brechen, wie dies im Stand der Technik beobachtet wurde.

## Patentansprüche

1. Vorrichtung zur Fixierung von Leiterbahnen (22,24) auf mindestens einer ersten Haupt-Oberfläche (20o) mindestens einer Solarzelle (20), mit folgenden Merkmalen:
1.1 einer Transporteinrichtung, auf der mehrere Solarzellen (20) im Abstand zueinander entlang einer Transportrichtung (T) bewegbar sind,
1.2 auf der der Transporteinrichtung gegenüberliegenden Haupt-Oberfläche (20o) jeder Solarzelle (20) verlaufenden mehrere Leiterbahnen (22,24),
1.3 mindestens einer Traverse (30), die von einer Ausgangsposition im Abstand zu der Haupt-Oberfläche (20o) in eine Funktionsposition bewegbar ist, in der mehrere Niederhalter (50), die von der Traverse (30) in Richtung auf die Haupt-Oberfläche (20o) der Solarzelle (20) abstehen, flächig auf die korrespondierenden Leiterbahnen (22,24) drücken, wobei
1.4 die Niederhalter (50) im unbelasteten Zustand unter einem Winkel ungleich 90 Grad zur korrespondierenden Oberfläche (20o) der Solarzelle (20) verlaufen und
1.5 die Niederhalter (50) von Federn (52) gebildet werden, die mit einem Ende an der Traverse (30) befestigt sind und an ihrem anderen, freien Ende jeweils mindestens einen sphärischen Körper (54) aufweisen, der in der Funktionsposition der Traverse (30) auf der zugehörigen Leiterbahn (22,24) aufliegt.

2. Vorrichtung nach Anspruch 1, deren Niederhalter (50) aus Spiralfedern mit endseitig angeformtem sphärischen Körper (54) bestehen.

3. Vorrichtung nach Anspruch 1, deren Niederhalter (50) im unbelasteten Zustand unter einem Winkel zwischen 10 und 80 Grad zur korrespondierenden Oberfläche (20o) der Solarzelle (20) verlaufen.

4. Vorrichtung nach Anspruch 1, bei der die sphärischen Körper (54) der Niederhalter (50) aus einem Material mit einer Temperaturbeständigkeit bis mindestens 300 Grad C bestehen.

5. Vorrichtung nach Anspruch 1, bei der die sphärischen Körper (54) der Niederhalter (50) aus mindestens einem Werkstoff aus der Gruppe: Keramik, Porzellan, Glas, Kunststoff besteht.

6. Vorrichtung nach Anspruch 1, bei der die sphärischen Körper (54) mindestens eine der folgenden geometrischen Formen aufweisen: Kugel, Halbkugel, Ei, Linse, Zylinder, Kegelstumpf, Kegel, Prisma.

7. Vorrichtung nach Anspruch 1, bei der die Niederhalter (50) so an der Traverse (30) befestigt sind, dass jeweils vier sphärischen Körper (54), im unbelasteten Zustand, an Ecken eines fiktiven Rechtecks liegen.

8. Vorrichtung nach Anspruch 1, deren Traverse (30) entlang einer Kurvenbahn von der Ausgangsposition in die Funktionsposition bewegbar ist.

9. Vorrichtung nach Anspruch 1, bei der die Geschwindigkeit, mit der die Traverse von der Ausgangsposition in die Funktionsposition bewegt wird, degressiv ist.

10. Vorrichtung nach Anspruch 1, deren Transporteinrichtung aus mindestens einem Transportträger (10) zur Aufnahme der Solarzellen (20) besteht.

11. Vorrichtung nach Anspruch 10, deren Transportträger (10) Schienen (12) aufweist, die auf ihrer, den Solarzellen zugewandten Oberseite (12o) stegartige Erhöhungen (14) aufweisen, die so angeordnet sind, dass die auf zweiten Haupt-Oberflächen (20u) der Solarzellen (20) verlaufenden Leitbahnen (22,24) auf den stegartigen Erhöhungen (14) aufliegen und parallel zu diesen verlaufen.

12. Vorrichtung nach Anspruch 1, deren Traverse (30) in einer Richtung bewegbar ist, die in mindestens einer weiteren Richtung des Koordinatensystems senkrecht zur Transportrichtung (T) der Transporteinrichtung verläuft.

13. Vorrichtung nach Anspruch 1 bei der die sphärischen Körper (54) aus einem faserverstärkten Kunststoff bestehen.

## Claims

1. Device for fixing conductor tracks (22, 24) on at least one first main-surface (20o) of at least one solar cell (20), including the following features:
1.1 a transport installation on which a series of solar cells (20) are arranged at a distance to each other and moveable in a transport direction (T),
1.2 a series of conductor tracks (22, 24) extend along the first main-surface (20o) opposing the transport installation of each solar cell (20),
1.3 at least one crossbar (30) moveable from a starting position with a distance to the first main-surface (20o) to an operating position in which a series of hold-down devices (50) that are protruding from the crossbar (30) towards the first main-surface (20o) of the solar cell (20) do press along a plane onto the corresponding conductor tracks (22, 24) wherein
1.4 the hold-down devices (50), in their unloaded condition, extend at an angle unlike 90 degrees to the corresponding surface (20o) of the solar cell (20) and
1.5 the hold-down devices (50) are springs (52) that are mounted to the crossbar (30) with one end, each having at their other, free end, at least one spherical body (54) that is resting on the corresponding conductor track (22, 24) in the operating position of the crossbar (30).

2. Device according to claim 1 which hold-down devices (50) are spiral springs with spherical body (54) attached at their end.

3. Device according to claim 1 which hold-down devices (50), in their unloaded condition, extend at an angle between 10 and 80 degrees to the corresponding surface (20o) of the solar cell (20).

4. Device according to claim 1 wherein the spherical bodies (54) of the hold-down devices (50) are made of a material that is temperature resistant up to at least 300° C.

5. Device according to claim 1, wherein the spherical bodies (54) of the hold-down devices (50) are of at least one material from the group: ceramic, porcelain, glass, plastic.

6. Device according to claim 1, wherein the spherical bodies (54) have at least one of the following geometrical shapes: sphere, hemisphere, egg, lens, cylinder, truncated cone, cone, prism.

7. Device according to claim 1, wherein the hold-down devices (50) are mounted at the crossbar (30) in such a way that in unloaded condition four spherical bodies (54) are arranged at corners of a fictious square.

8. Device according to claim 1, wherein the crossbar (30) can be moved along a curved track from the starting position into the operating position.

9. Device according to claim 1, wherein the speed the crossbar is moved from the starting position into the operating position is degressive.

10. Device according to claim 1, which transport installation has at least one transport carrier (10) for supporting the solar cells (20).

11. Device according to claim 10, which transport carrier (10) has tracks (12) with bridge-like ridges (14) on their surface (12o) pointing towards the solar cells (20) that are arranged in such a manner that the conductor tracks (22, 24) which run along the second main-surfaces (20u) of the solar cells (20) are supported by the bridge-like ridges (14) and extend parallel to them.

12. Device according to claim 1 which crossbar (30) is moveable in a direction which extends along at least one other direction of the coordinate system perpendicular to the transport direction (T) of the transport installation.

13. Device according to claim 1, wherein the spherical bodies (54) are made of a fiber reinforced plastic.

## Revendications

1. Dispositif pour fixer des pistes conductrices (22, 24) sur au moins une première surface principale (20o) d'au moins une cellule solaire (20), présentant les caractéristiques suivantes :
1.1 un système de transport, sur lequel plusieurs cellules solaires (20) peuvent être déplacées à distance les unes des autres le long d'un sens de transport (T),
1.2 plusieurs pistes conductrices (22, 24) s'étendant sur la surface principale (20o), faisant face au système de transport, de chaque cellule solaire (20),
1.3 au moins une traverse (30), qui peut être déplacée d'une position de départ à distance de la surface principale (20o) dans une position de fonction, dans laquelle plusieurs serre-flans (50), qui dépassent de la traverse (30) en direction de la surface principale (20o) de la cellule solaire (20), appuient à plat sur les pistes conductrices (22, 24) correspondantes,
1.4 les serre-flans (50) étant disposés dans l'état non chargé sous un angle différent de 90 degrés par rapport à la surface (20o) correspondante de la cellule solaire (20) et
1.5 les serre-flans (50) étant formés par des ressorts (52), qui sont fixés par une extrémité à la traverse (30) et présentent sur leur autre extrémité libre à chaque fois au moins un corps (54) sphérique, qui repose, dans la position fonctionnelle de la traverse (30), sur la piste conductrice (22, 24) spécifique.

2. Dispositif selon la revendication 1, dont les serre-flans (50) sont à base de ressorts en spirale avec un corps (54) sphérique formé dessus côté extrémité.

3. Dispositif selon la revendication 1, dont les serre-flans (50) sont agencés, dans l'état non chargé, sous un angle compris entre 10 et 80 degrés par rapport à la surface (20o) correspondante de la cellule solaire (20).

4. Dispositif selon la revendication 1, sur lequel les corps (54) sphériques des serre-flans (50) sont à base d'un matériau présentant une stabilité à la température jusqu'à au moins 300 degrés C.

5. Dispositif selon la revendication 1, sur lequel les corps (54) sphériques des serre-flans (50) sont à base d'au moins un matériau choisi dans le groupe suivant : céramique, porcelaine, verre, matière synthétique.

6. Dispositif selon la revendication 1, sur lequel les corps (54) sphériques présentent au moins une des formes géométriques suivantes : sphère, demi-sphère, oeuf, lentille, cylindre, cône tronqué, cône, prisme.

7. Dispositif selon la revendication 1, sur lequel les serre-flans (50) sont fixés sur la traverse (30), de telle sorte qu'à chaque fois quatre corps (54) sphériques sont contigus, dans l'état non chargé, à des angles d'un rectangle fictif.

8. Dispositif selon la revendication 1, dont la traverse (30) peut être déplacée le long d'une trajectoire de courbe de la position de départ à la position de fonction.

9. Dispositif selon la revendication 1, sur lequel la vitesse, avec laquelle la traverse est déplacée de la position de départ à la position de fonction, est dégressive.

10. Dispositif selon la revendication 1, dont le système de transport comprend au moins un support de transport (10) pour le logement des cellules solaires (20).

11. Dispositif selon la revendication 10, dont le support de transport (10) présente des rails (12), qui présentent sur leur côté supérieur (12o) tourné vers les cellules solaires des élévations (14) en forme de nervure, qui sont disposées de telle sorte que les pistes conductrices (22, 24), agencées sur des secondes surfaces principales (20u) des cellules solaires (20), reposent les unes sur les autres sur les élévations (14) en forme de nervure et sont agencées parallèlement à celles-ci.

12. Dispositif selon la revendication 1, dont la traverse (30) peut être déplacée dans une direction, qui est agencée dans au moins une autre direction du système de coordonnées perpendiculairement au sens de transport (T) du système de transport.

13. Dispositif selon la revendication 1, sur lequel les corps (54) sphériques sont à base d'une matière synthétique renforcée de fibre.
